# EUROPÄISCHE PATENTSCHRIFT

(11) **EP 1 439 329 B1**
(45) Veröffentlichungstag und Bekanntmachung des Hinweises auf die Patenterteilung: **01.08.2007**
(21) Anmeldenummer: 04000842.7
(22) Anmeldetag: 16.01.2004
(51) Int. Cl.: F16H 61/00, F16H 37/08

(54) **Verfahren zum Steuern von Übersetzungsänderungen an einem Getriebe für Kraftfahrzeuge**
Method of controlling ratio changes in a vehicle transmission
Méthode de commande de changements de vitesses d'une transmission de véhicule

(30) Priorität: 18.01.2003 DE 10301736
(43) Veröffentlichungstag der Anmeldung: 21.07.2004
(73) Patentinhaber: AUDI AG, 85045 Ingolstadt (DE)
(72) Erfinder: Märkl, Johann, 85128 Nassenfels (DE); Schenker, Mario, 85049 Ingolstadt (DE)
(74) Vertreter: Thielmann, Frank

(56) Entgegenhaltungen:
- DE-A1- 10 302 992
- US-A- 5 823 052

## Beschreibung

Die Erfindung betrifft ein Verfahren zum Steuern der Übersetzungsänderungen an einem Getriebe für Kraftfahrzeuge nach dem Oberbegriff des Anspruchs 1, wie aus der US-A-5 823 052 bekannt ist.

Ein gattungsgemäßes Verfahren zum Steuern der Übersetzungsänderungen an einem Getriebe für Kraftfahrzeuge ist aus Audi-Serienfahrzeugen mit der Bezeichnung Audi-Multitronic bekannt. Dazu umfasst das Getriebe einen stufenlos verstellbaren Getriebeteil in der Art eines steuerbaren Umschlingungsgetriebes als Variator und eine Steuereinheit womit in einem durch Fahrereingriff wählbaren Automatik-Modus das Übersetzungsverhältnis stufenlos im gesamten Verstellbereich betriebsangepasst selbsttätig variierbar ist. Alternativ kann durch einen Fahrereingriff auch ein manueller Modus, der als Tiptronic-Modus bekannt ist, mittels eines Wählhebels oder über Lenkradschalter gewählt werden, wobei in Stufenabständen vorgegebene Übersetzungsverhältnisse als Gänge anwählbar und am stufenlosen Getriebe als wechselbare feste Gangschaltpunkte mit den zugeordneten gangbestimmten Übersetzungsverhältnissen mittels der Steuereinheit einstellbar sind. Alle diese Gangschaltpunkte werden dabei gleichermaßen durch eine Variatorverstellung angefahren, so dass sich für einen Fahrer keine merkbaren Unterschiede bei unterschiedlichen Gangwechseln ergeben.

Um insbesondere auch stark motorisierte Fahrzeuge mit stufenlosen Getrieben ausrüsten zu können, ist es bekannt einem stufenlosen Getriebeteil ein Leistungsverzweigungsteil zuzuordnen (DE 196 31 236 C2, Fig 2) der mittels zumindest einer Bereichswechselkupplung in eine niedrigere und eine höhere Gesamtübersetzung umschaltbar ist, wobei der stufenlose Getriebeteil in einem der Übersetzungsbereiche mit umgekehrter Kraftflussrichtung wirkt dergestalt, dass bei einem vorgegebenen Umschalt-Gesamtübersetzungsverhältnis und einem diesem zugeordneten Übersetzungsverhältnis des stufenlosen Getriebeteils ein Synchronpunkt als Umschaltpunkt für den Automatik-Modus bestimmt ist, an dem die einander zugeordneten Kupplungselemente der mindestens einen Bereichswechselkupplung mit gleicher Drehzahl laufen, so dass dort die Bereichswechselkupplung synchronisiert geschaltet werden kann.

Bei einem solchen Getriebe muss abhängig vom Fährzustand zwischen den Bereichen des Leistungsverzweigungsteils mittels der Bereichswechselkupplung umgeschaltet werden, wobei es insbesondere bei großen Motordrehzahländerungen zu einer Änderung der Beschleunigung der getriebeinternen Drehmassen kommt, was zu einem spürbaren Beschleunigungsruck des Fahrzeugs führen kann. Bei Versuchen ein solches Getriebe auch mit dem eingangs geschilderten manuellen Modus zu betreiben, bei dem eine sportliche Fahrweise mit einer sehr schnellen Reaktion des Fahrzeugs erreicht werden soll, haben sich aufgrund der hohen erforderlichen Dynamik ruckartig spürbare Bereichsumschaltungen ergeben. Diese waren für einen Fahrer wesentlich unkomfortabler spürbar als Gangschaltungen ohne Bereichsumschaltung, welche nur durch eine Variatorverstellung erfolgten. Ein solcher unkomfortabler Schaltvorgang mit Bereichswechsel, der spürbar unterschiedlich zu komfortableren Schaltvorgängen ohne Bereichswechsel verläuft, ist bei hochwertigen, stark motorisierten und auf Komfort ausgelegten Fahrzeugen nicht hinnehmbar.

Aufgabe der Erfindung ist es daher ein gattungsgemäßes Verfahren zum Steuern der Übersetzungsänderung an einem Getriebe für Kraftfahrzeuge so weiterzubilden, dass sich im manuellen Modus bei Verwendung eines leistungsverzweigten Getriebes keine für einen Fahrer spürbaren Unterschiede zwischen einer Schaltung mit Bereichswechsel und einer Schaltung ohne Bereichswechsel ergeben.

Diese Aufgabe wird mit den Merkmalen des Anspruchs 1 gelöst.

Dem stufenlosen Getriebeteil ist ein Leistungsverzweigungsteil zugeordnet, der mittels zumindest einer Bereichswechselkupplung in eine niedrigere und eine höhere Gesamtübersetzung umschaltbar ist, wobei der stufenlose Getriebeteil in einem der Übersetzungsberelche mit umgekehrter Kraftflussrichtung wirkt. Bei einem vorgegebenen Umschalt-Gesamtübersetzungsverhältnis und diesem zugeordneten Übersetzungsverhältnis des stufenlosen Getriebeteils ist ein Synchronpunkt bestimmt, an dem die einander zugeordneten Kupplungselemente der zumindest einen Bereichswechselkupplung mit gleicher Drehzahl laufen. Dieser Synchronpunkt stellt den Umschaltpunkt für den Automatik-Modus dar, wobei für eine Vergleichmäßigung der Umschaltung geringe Drehzahlunterschiede zulässig sein können.

Im manuellen Modus liegt ein Eingangschaltpunkt bei einem bezüglich des Umschaltpunkts kleineren Gesamtübersetzungsverhältnis und ein übernächster Gangschaltpunkt bezüglich des Umschaltpunkts bei einem größeren Gesamtübersetzungsverhältnis.

Zwischen diesen Gangschaltpunkten liegt ein weiterer vom Fahrer anwählbarer Gangschaltpunkt der als Doppel-Gangschaltpunkt ausgebildet ist mit einem je nach Schaltrichtung von der Steuereinheit schaltbaren Hoch-Gangschaltpunkt oder Rück-Gangschaltpunkt. Der Hoch-Gangschaltpunkt und der Rück-Gangschaltpunkt liegen mit ihren zugeordneten Gesamtübersetzungsverhältnissen so eng zusammen, dass diese ein Fahrer fahrgefühlmäßig nur einem, nämlich dem angewählten Gangschaltpunkt zuordnet. Zwischen den eng beisammen liegenden Gesamtübersetzungsverhältnissen des Hoch-Gangschaltpunkts und des Rück-Gangschaltpunkts liegt noch das Umschalt-Gesamtübersetzungsverhältnis des Umschaltpunkts.

Beim Hochschalten vom benachbarten unteren Gangschaltpunkt auf den höheren Doppel-Gangschaltpunkt wird von der Steuereinheit auf den Hoch-Gangschaltpunkt hochgeschaltet, wobei in der letzten Phase des Hochschaltvorgangs die Bereichswechselkupplung für einen Bereichswechsel in die höhere Gesamtübersetzung betätigt wird. Bedarfsweise und bei einer entsprechenden Anwahl des Fahrers wird dann vom Hoch-Gangschaltpunkt weiter auf den noch höheren nächsten Gangschaltpunkt hochgeschaltet.

Beim Rückschalten vom höheren Gangschaltpunkt auf den niedrigeren Doppel-Gangschaltpunkt wird von der Steuereinheit auf den Rück-Gangschaltpunkt rückgeschaltet, wobei in der letzten Phase des Rückschaltvorgangs die Bereichswechselkupplung für einen Bereichswechsel in die niedrigere Gesamtübersetzung betätigt wird. Bedarfsweise wird dann bei einer Anwahl des Fahrers vom Rück-Gangschaltpunkt weiter auf den noch niedrigeren nächsten Gang-Schaltpunkt rückgeschaltet.

Beim erfindungsgemäßen Schaltablauf kann die Bereichsumschaltung durch die Verwendung des Doppel-Gangschaltpunkts erst am Ende einer Gangschaltung ohne Bereichsumschaltung und damit bei geringem Motordrehzahlgradienten erfolgen. Damit erfolgt auch nur eine geringe Änderung der Beschleunigung der getriebeintemen Drehmassen, was sich in einem relativ kleinen, für den Fahrer nicht wahrnehmbaren Beschleunigungsruck des Fahrzeugs äußert. Der Fahrer spürt somit keinen Unterschied im manuellen Modus zwischen einer Schaltung mit Bereichswechsel und einer Schaltung ohne Bereichswechsel. Es erfolgt somit weder eine Beeinträchtigung des Komforteindrucks bei einem Bereichswechsel noch wird der Fahrer durch unterschiedliche Wahrnehmungen bei Schaltvorgängen mit Bereichswechsel und ohne Bereichswechsel verunsichert.

Für eine weitere Steigerung einer sportlichen Schaltdynamik ohne Komforteinbußen wird in einer Weiterbildung gemäß Anspruch 2 vorgeschlagen, dass eine vorbereitende Umschaltung vom Hoch-Gangschaltpunkt auf den Rück-Gangschaltpunkt selbsttätig vom Steuergerät ohne Zutun des Fahrers erfolgt, wenn durch erfasste Betriebs- und/oder Fahrdynamikparameter eine bevorstehende Rückschaltung auf den vorhergehenden Gangschaltpunkt sensiert wurde. Entsprechend erfolgt eine vorbereitende Umschaltung vom Rück-Gangschaltpunkt auf den Hoch-Gangschaltpunkt, wenn eine bevorstehende Hochschaltung auf den nachfolgenden Gangschaltpunkt sensiert wurde.

Gemäß Anspruch 3 kann für eine Schaltvergleichmäßigung ggf. die Bereichswechselkupplung mit einem geringem Kupplungsschlupf gesteuert werden.

Zweckmäßig wird nach Anspruch 4 bei sechs stufenförmigen Gangschaltpunkten als Doppel-Gangschaltpunkt der vierte Gangschaltpunkt gewählt.

Anhand einer Figur wird die Erfindung näher erläutert.

Die einzige Figur zeigt eine Grafik mit einer Darstellung der manuellen Schaltpunkte eines stufenlosen Getriebeteils in einem manuellen Schaltmodus, wobei dessen Übersetzungsverhältnis über dem Gesamtübersetzungsverhältnis eines automatischen Getriebes aufgetragen ist (Kurve 10).

Grundsätzlich wird hier von einem automatischen Getriebe für Kraftfahrzeuge ausgegangen, wie es beispielsweise in der vorgenannten DE 196 31 236 C2 beschrieben ist und dass sich im Wesentlichen aus einem stufenlosen Getriebeteil und einem Leistungsverzweigungsgetriebe zusammensetzt sowie z. B. elektrohydraulisch gesteuert ist.

Soll ein derartiges automatisches Getriebe auch in einem manuellen Modus betreibbar sein, wobei dann analog einem Schaltgetriebe mit festen Übersetzungsverhältnissen Gangschaltpunkte vorgegeben sind, die über den stufenlosen Getriebeteil nach Auslösen entsprechender Schaltsignale elektrohydraulisch angefahren werden, so wird über ein nicht dargestelltes Getriebesteuergerät wie nachstehend beschrieben verfahren:

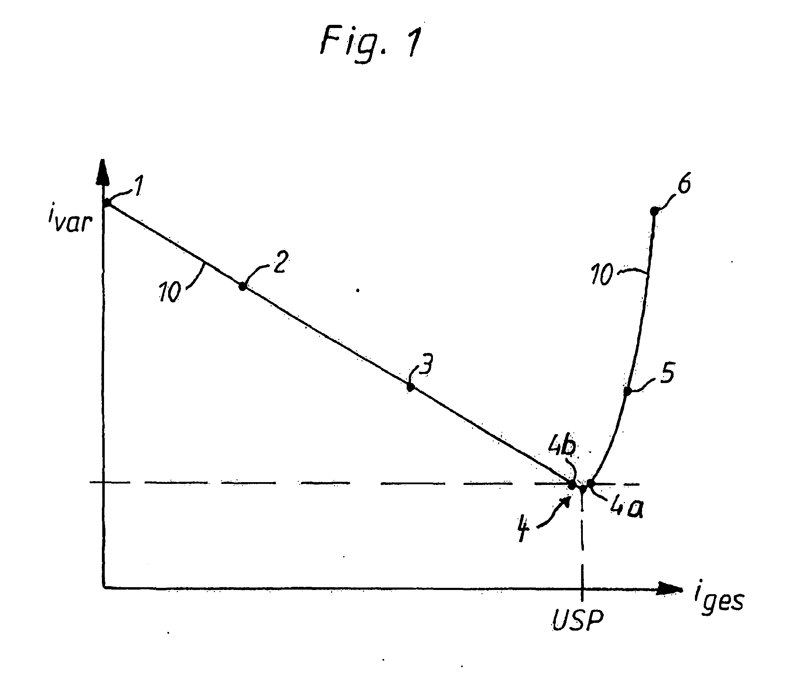

Im Diagramm der Fig. 1 ist auf der linken Seite ein erstes Leistungsverzweigungsteil und auf der rechten Seite ein sich daran anschließendes zweites Leistungsverzweigungsteit gezeigt, wobei dem ersten Leistungsverzweigungsteil die festen Gangschaltpunkte 1, 2 und 3 und dem rechten Leistungsverzweigungsteil die festen Gangschaltpunkte 5 und 6 zugeordnet sind. Zwischen den beiden Gangschaltpunkten 3 und 5 liegt ein weiterer vom Fahrer anwählbarer Gangschaltpunkt 4, der als Doppel-Gangschaltpunkt ausgebildet ist, mit einem je nach Schaltrichtung von der Steuereinheit schaltbaren Hoch-Gangschaltpunkt 4a, der auf dem rechten Leistungsverzweigungsteil liegt und einem Rück-Gangschaltpunkt 4b, der auf dem linken Leistungsverzweigungsteil liegt. Wie dies der Fig. 1 entnommen werden kann, liegen die beiden Gangschaltpunkte 4a und 4b mit ihren jeweiligen zugeordneten Gesamtübersetzungsverhältnissen i_{ges} eng zusammenliegen.

Wie dies der Fig. 1 weiter entnommen werden kann, liegt zwischen dem Hoch-Gangschaltpunkt 4a und dem Rück-Gangschaltpunkt 4b des Doppel-Gangschaltpunktes 4 der als Umschaltpunkt USP bezeichnete Synchronpunkt für den Automatik-Modus, an dem die einander zugeordneten Kupplungselemente der Bereichswechselkupplungen mit einer im Wesentlichen gleichen Drehzahl laufen.

Wird nun im manuellen Modus vom Fahrer ein Hochschalten vom Gangschaltpunkt 3 auf den nächsthöheren Doppel-Gangschaltpunkt 4 gewünscht, so wird von der Steuereinheit auf den auf dem rechten und damit anderen Leistungsverzweigungsteil liegenden Hoch-Gangschaltpunkt 4a hochgeschaltet, wobei in der letzten Phase des Hochschaltvorgangs die Bereichswechselkupplung für einen Bereichswechsel in die höhere Gesamtübersetzung betätigt wird.

Wünscht der Fahrer im manuellen Modus ein Rückschalten vom Gangschaltpunkt 5 auf den niedrigeren Doppel-Gangschaltpunkt 4, so wird hier dann entsprechend umgekehrt von der Steuereinheit auf den auf dem linken und damit anderen Leistungsverzweigungsteil liegenden Rück-Gangschaltpunkt 4b zurückgeschaltet, wobei auch hier dann in der letzten Phase des Rückschaltvorgangs die Bereichswechselkupplung für einen Bereichswechsel in die niedrigere Gesamtübersetzung betätigt wird.

Durch das enge Zusammenliegen des Hoch-Gangschaltpunktes 4a und des Rück-Gangschaltpunktes 4b mit ihren jeweils zugeordneten Gesamtübersetzungsverhältnissen wird erreicht, dass der Fahrer im manuellen Modus keinen Unterschied zwischen einer Schaltung mit Bereichswechsel und einer Schaltung ohne Bereichswechsel, wie dies z. B. bei einer Schaltung von 2 nach 3 der Fall wäre, spürt.

## Patentansprüche

1. Verfahren zum Steuern der Übersetzungsänderungen an einem Getriebe für Kraftfahrzeuge, mit einem stufenlos verstellbaren Getriebeteil und einer Steuereinheit womit in einem Automatik-Modus das Übersetzungsverhältnis (iᵥₐᵣ) stufenlos im gesamten Verstellbereich betriebsangepasst variierbar ist und womit in einem manuellen Modus vom Fahrer mittels eines Wahlelements bestimmte, in Stufenabständen vorgegebene Übersetzungsverhältnisse als Gänge anwählbar und am stufenlosen Getriebe als wechselbare feste Gangschaltpunkte mit den zugeordneten gangbestimmten Übersefzungsverhältnissen einstellbar sind, wobei
dem stufenlosen Getriebeteil ein Leistungsverzweigungsteil zugeordnet ist, der mittels zumindest einer Bereichswechselkupplung in eine niedrigere und eine höhere Gesamtübersetzung umschaltbar ist, **dadurch gekennzeichnet, dass** der stufenlose Getriebeteil in einem der Übersetzungsbereiche mit umgekehrter Kraftflussrichtung wirkt dergestalt,
dass bei einem vorgegebenen Umschaft-Gesamtübersetzungsverhältnis (i_{ges}) und diesem zugeordneten Übersetzungsverhältnis (iᵥₐᵣ) des stufenlosen Getriebeteils ein Synchronpunkt als Umschaltpunkt (USP) für den Automatik-Modus bestimmt ist, an dem die einander zugeordneten Kupplungselemente der mindestens einen Bereichswechselkupplung mit gleicher Drehzahl laufen,
dass im manuellen Modus ein Gangschaltpunkt (3) bei einem bezüglich des Umschaltpunkts (USP) kleineren Gesamtübersetzungsverhältnis (i_{ges}) und ein übernächster Gangschaltpunkt (5) bezüglich des Umschaltpunkts bei einem größeren Gesamtübersetzungsverhältnis (i_{ges}) liegt,
dass zwischen diesen Gangschaltpunkten (3, 5) ein weiterer vom Fahrer anwählbarer Gangschaltpunkt (4) liegt, der als Doppel-Gangschaltpunkt ausgebildet ist, mit einem je nach Schaltrichtung von der Steuereinheit schaltbaren Hoch-Gangschaltpunkt (4a) oder Rück-Gangschaltpunkt (4b), wobei der Hoch-Gangschaltpunkt (4a) und der Rück-Gangschaltpunkt (4b) mit ihren zugeordneten Gesamtübersetzungsverhältnissen (i_{ges}) so eng zusammen liegen, dass diese ein Fahrer fahrgefühlsmäßig nur einem gleichen angewählten Gangschaltpunkt (4) zuordnet und zwischen den Gesamtübersetzungsverhältnissen (i_{ges}) des Hoch-Gangschaltpunkts (4a) und des Rück-Gangschaltpunkts (4b) das Umschalt-Gesamtübersetzungsverhältnis des Umschaltpunkts (USP) liegt,
dass beim Hochschalten vom benachbarten unteren Gangschaltpunkt (3) auf den höheren Doppel-Gangschaltpunkt (4) von der Steuereinheit auf den Hoch-Gangschaltpunkt (4a) hochgeschaltet wird, wobei in der letzten Phase des Hochschaltvorgangs die Bereichswechselkupplung für einen Bereichswechsel in die höhere Gesamtübersetzung betätigt wird und dann bedarfsweise bei einer Anwahl des Fahrers vom Hoch-Gangschaltpunkt (4a) weiter auf den noch höheren nächsten Gangschaltpunkt (5) hochgeschaltet wird, und
dass beim Rückschalten vom höheren Gangschaltpunkt (5) auf den niedrigeren Doppel-Gangschaltpunkt (4) von der Steuereinheit auf den Rück-Gangschaltpunkt (4b) rückgeschaltet Wird, wobei in der letzten Phase des Rückschaltvorgangs die Bereichswechselkupplung für einen Bereichswechsel in die niedrigere Gesamtübersetzung betätigt wird und dann bedarfsweise bei einer Anwahl des Fahrers vom Rück-Gangschaltpunkt (4b) weiter auf den noch niedriegeren nächsten Gangschaltpunkt (3) rückgeschaltet wird.

2. Verfahren nach Anspruch 1, **dadurch gekennzeichnet, dass** eine vorbereitende Umschaltung vom Hoch-Gangschaltpunkt (4a) auf dem Rück-Gangschaltpunkt (4b) selbsttätig vom Steuergerät ohne Zutun des Fahrers erfolgt, wenn durch erfasste Betriebs- und/oder Fahrdynamikparameter eine bevorstehende Rückschaltung auf den vorhergehenden Gangschaltpunkt (3) sensiert wurde und entsprechend eine vorbereitende Umschaltung vom Rück-Gangschaltpunkt (4b) auf den Hoch-Gangschaltpunkt (4a) erfolgt wenn eine bevorstehende Hochschaltung auf den nachfolgenden Gangschaltpunkt (5) sensiert wurde.

3. Verfahren nach Anspruch 1 oder 2, **dadurch gekennzeichnet, dass** die Bereichswechselkupplung mit einem Kupplungsschlupf gesteuert wird.

4. Verfahren nach einem der Ansprüche 1 bis 3, **dadurch gekennzeichnet, dass** bei sechs stufenförmigen Gangschaltpunkten (1 bis 6) des stufenlosen Getriebeteils der Doppel-Gangschaltpunkt der vierte Gangschaltpunkt (4) ist.

## Claims

1. A method for controlling the ratio changes in a vehicle transmission, with an infinitely adjustable transmission section and a control unit with which the reduction ratio (iᵥₐᵣ) is infinitely variable throughout the adjustment range in an automatic mode, so that it is adapted to the operation, and with which certain reduction ratios predetermined in stepped intervals may be selected as gears in a manual mode by the driver, and can be set in the stepless transmission as variable fixed gear shift points with the assigned gear-determined reduction ratios, wherein a power branching section is assigned to the stepless transmission section, which power branching section can be switched to a lower and a higher total ratio by means of at least one range change coupling, **characterised in that** the stepless transmission section acts in one of the ratio ranges in the reverse power flow direction so that at a predetermined total switching reduction ratio (i_{ges}) and at this assigned reduction ratio (iᵥₐᵣ) of the stepless transmission section a synchronous point is determined as the switching point (USP) for the automatic mode in which the mutually assigned coupling elements of the at least one range changing coupling run at the same speed,
**in that** in the manual mode a gear shift point (3) lies at a total reduction ratio (i_{ges}) that is smaller than at the switching point (USP), and next but one gear shift point (5) lies at a total transmission ratio (i_{ges}) that is higher than at the switching point,
**in that** a further gear shift point (4) that can be selected by the driver lies between these gear shift points (3, 5), which shift point (4) is designed as a double gear shift point with a up gear shift point (4a) or down gear shift point (4b) that can be shifted by the control unit according to the direction of shifting, wherein the up gear shift point (4a) and the down gear shift point (4b) lie so close together, in terms of their assigned total reduction ratios (i_{ges}) that a driver assigns them, based on driving feel, to only one and the same selected gear shift point (4), and wherein the switching total reduction ratio of the switching point (USP) lies between the total reduction ratios (i_{ges}) of the up gear shift point (4a) and the down gear shift point (4b),
**in that** when shifting up from the adjacent lower gear shift point (3) to the higher double gear shift point (4), there is upward shifting by the control unit to the up gear shift point (4a), wherein the range change coupling for a range change to the higher total ratio is actuated in the final phase and then, if required, there is further upward shifting, at the election of the driver, from the up gear shift point (4a) to the even higher next gear shift point (5), and
**in that** when down shifting from the higher gear shift point (5) to the lower double gear shift point (4), there is down shifting by the control unit to the down gear shift point (4b), wherein the range change coupling for a range change to the lower total ratio is actuated in the final phase of the down shifting process and then, if required there is further down shifting, at the election of the driver, from the down gear shift point (4b) to the even lower next gear shift point (3).

2. The method according to Claim 1, **characterised in that** a preparatory shift from the up gear shift point (4a) to the down gear shift point (4b) is automatically effected by the control unit without the intervention of the driver when an imminent down shift to the previous down shift point (3) has been sensed by recorded operating and/or driving dynamics parameters, and correspondingly a preparatory shift from the down gear shift point (4b) to the up gear shift point (4a) is effected when an imminent up shift to the next gear shift point (5) has been sensed.

3. The method according to Claim 1 or 2, **characterised in that** the range change coupling is controlled with a clutch slip.

4. The method according to one of Claims 1 to 3, **characterised in that** where there are six step-shaped gear shift points (1 to 6) of the stepless transmission section, the double gear shift point is the fourth gear shift point (4).

## Revendications

1. Procédé de commande de changements de vitesses d'une transmission pour des véhicules automobiles avec un élément de transmission à réglage continu et avec une unité de commande, grâce à quoi dans un mode automatique, le rapport de transmission (iᵥₐᵣ) adapté au fonctionnement dans toute la gamme de réglage, est variable en continu et grâce à quoi, dans un mode manuel, les rapports de transmission déterminés au moyen d'un élément de sélection, prédéfinis en écarts d'étage sont sélectionnables par le conducteur sous forme de vitesses et sont réglables sur la transmission à réglage continu sous forme de points fixes de changement de vitesse changeables avec les rapports de transmissions déterminés correspondants,
un élément de branchement de puissance étant affecté à l'élément de transmission à réglage continu et commutable au moyen d'au moins un accouplement interchangeable de gamme dans une transmission totale plus basse et plus élevée, **caractérisée en ce que** l'élément de transmission à réglage continu agit dans les gammes de transmission avec un sens de flux de force inversé, de sorte
que, pour un rapport total de transmission de commutation prédéfini (i_{ges}) et le rapport de transmission (iᵥₐᵣ) - affecté à ce dernier - de l'élément de transmission à réglage continu, un point synchrone est déterminé comme point de commutation (USP) pour le mode automatique, pour lequel les éléments d'accouplements affectés les uns aux autres d'au moins un accouplement interchangeable de gamme fonctionnent avec le même nombre de rotations, que, en mode manuel, un point de changement de vitesse (3) se situe dans un rapport total de transmission (i_{ges}) plus petit par rapport au point de commutation (USP) et un second point de changement de vitesse consécutif (5) par rapport au point de commutation dans un rapport total de transmission (i_{ges}) plus grand,
qu'un autre point de changement de vitesse (4) sélectionnable par le conducteur se situe entre ces deux points de changement de vitesses (3, 5), ledit point étant réalisé sous forme de point de changement de vitesse double avec un point de montée du rapport (4a) ou un point de rétrogradation (4b) commutable par l'unité de commande en fonction du sens de commutation, le point de montée du rapport (4a) et le point de rétrogradation (4b) étant étroitement liés avec leurs rapports totaux de transmission correspondant (i_{ges}), de sorte qu'un conducteur a le sentiment de n'attribuer ces derniers qu'à un seul point de changement de vitesse sélectionné et que le rapport total de transmission de commutation du point de commutation (USP) se situe entre les rapports totaux de transmission (i_{ges}) du point de montée de rapport (4a) et du point de rétrogradation (4b),
que lors de la montée du rapport du point de changement de vitesse inférieur adjacent (3) au point de changement de vitesse double supérieur (4), l'unité de commande monte le rapport au point de montée du rapport (4a), l'accouplement interchangeable de gamme étant actionné pour un changement de gamme dans la transmission totale supérieure dans la dernière phase de la montée du rapport et en cas de besoin, si le conducteur le désire, il monte ensuite encore le rapport à partir du rapport du point de montée du rapport (4a) jusqu'au prochain point de changement de vitesse supérieur (5), et
que lors de la rétrogradation du point de changement de vitesse supérieur (5) au point de changement de vitesse double inférieur (4), l'unité de commande rétrograde au point de rétrogradation (4b), l'accouplement interchangeable de gamme étant actionné pour un changement de gamme dans la transmission totale inférieure dans la dernière phase de la rétrogradation et en cas de besoin, si le conducteur le désire, il réalise ensuite encore une nouvelle rétrogradation du point de rétrogradation (4b) au prochain point de changement de vitesse encore inférieur (3).

2. Procédé selon la revendication 1, **caractérisée en ce qu'**une commutation préparatoire du point de montée du rapport (4a) au point de rétrogradation (4b) est automatiquement réalisée par l'appareil de commande sans intervention du conducteur dans le cas où une rétrogradation imminente au point de changement de vitesse antérieur (3) serait détectée par les paramètres de fonctionnement et / ou de dynamique de conduite enregistrés et une commutation préparatoire du point de rétrogradation (4b) au point de montée de rapport (4a) est réalisée en conséquence si une montée de rapport imminente au point de changement de vitesse consécutif (5) a été détectée.

3. Procédé selon la revendication 1 ou 2, **caractérisée en ce que** l'accouplement interchangeable de gamme est commandé avec un glissement de l'embrayage.

4. Procédé selon la revendication 1 à 3, **caractérisée en ce que** pour six points de changement de vitesse (1 à 6) étagés de l'élément de transmission à réglage continu, le point de changement de vitesse double est le quatrième point de changement de vitesse (4).
